# EUROPEAN PATENT APPLICATION

(11) **EP 4 675 838 A2**
(43) Date of publication of application: **07.01.2026**
(21) Application number: 25210847.7
(22) Date of filing: 23.10.2025
(51) Int. Cl.: H01M 50/531, H01M 50/533

(54) **SECONDARY BATTERY AND ELECTRICAL DEVICE**

(30) Priority: 24.10.2024 CN 202411495576
(71) Applicant: Ningde Amperex Technology Limited, Ningde, Fujian 352100 (CN)
(72) Inventor: WU, Hua, Ningde City, Fujian Province 352100 (CN)
(74) Representative: Kraus & Lederer PartGmbB

(57) **Abstract**

A secondary battery (001) includes a housing (400), an electrode assembly (100), a first tab group (200), and a first adapter piece (500). The first tab group (200) is connected to the electrode assembly (100). The first tab group (200) includes a first outer-layer tab (210), an inner-layer tab (220), and a second outer-layer tab (230) sequentially disposed along a third direction (Z). The first adapter piece (500) includes a first protruding portion (510) and a first adapter portion (520). The first protruding portion (510) extends out of the housing (400) along a first direction (X). The first adapter portion (520) is located in the housing (400). When viewed along the first direction (X), the first adapter portion (520) is located on one side of the second outer-layer tab (230) facing away from the inner-layer tab (220) . The first adapter portion (520) is connected to the second outer-layer tab (230).

## Description

### TECHNICAL FIELD

This application relates to the technical field of energy storage, and in particular, to a secondary battery and an electrical device.

### BACKGROUND

The core component of a secondary battery is a battery cell. For a fast-charge cell, a multi-tab design can shorten an electron transmission path. A plurality of tabs can also reduce an internal resistance of the secondary battery, thereby reducing the temperature rise of the secondary battery during a fast charge. An adapter piece needs to be welded to the battery cell with a multi-tab structure to serve as an electrode terminal for charging and discharging. For an ultra-thin fast-charge cell with a multi-tab structure, due to a reduced thickness of the battery cell, transition joint welding needs to be performed based on a direct-out scheme during packaging. To be specific, a plurality of layers of tabs are directly led out from a housing, and then are welded to the adapter piece. However, in the related technical solutions, the direct-out scheme is prone to fail due to interference at the tab position under conditions of stress testing such as collision and drops, thereby affecting the safety of the secondary battery.

### SUMMARY

In view of the above situation, this application provides a secondary battery and an electrical device to improve the safety of the secondary battery.

According to a first aspect, an embodiment of this application provides a secondary battery. The secondary battery includes a housing, an electrode assembly, a first tab group, and a first adapter piece. The housing includes an accommodation cavity. The electrode assembly is accommodated in the accommodation cavity. The first tab group is connected to the electrode assembly. The first tab group includes a first outer-layer tab, an inner-layer tab, and a second outer-layer tab sequentially disposed along a third direction. At least one inner-layer tab is disposed. The first adapter piece includes a first protruding portion and a first adapter portion. The first protruding portion extends out of the housing along a first direction. The first adapter portion is located in the housing. When viewed along the first direction, the first adapter portion is located on one side of the second outer-layer tab facing away from the inner-layer tab,. The first adapter portion is connected to the second outer-layer tab. The first direction is perpendicular to the third direction. The third direction is a thickness direction of the electrode assembly. The first outer-layer tab and the second outer-layer tab mean the tabs located in the outermost layer in the third direction, to only one side of which an inner-layer tab is adjacent. An outer-layer tab or another inner-layer tab are adjacent to both sides of the inner-layer tab.

In the above secondary battery, the first tab group includes a first outer-layer tab, an inner-layer tab, and a second outer-layer tab disposed sequentially along the third direction. The first protruding portion of the first adapter piece extends out of the housing along the first direction. The first adapter portion of the first adapter piece is connected to the second outer-layer tab to form a transition-joint welding direct-out scheme. When viewed along the first direction, the first adapter portion is located on one side of the second outer-layer tab facing away from the inner-layer tab. In this way, the first adapter piece is located on one side of the entire first tab group, the side being faced away from the first outer-layer tab along the third direction. When the secondary battery is subjected to vibration or impact along the first direction repeatedly, because the first adapter piece is located on one side of the entire first tab group, the side being faced away from the first outer-layer tab along the third direction, the first adapter portion is not prone to cause impact interference to the first tab group, thereby improving the safety of the secondary battery.

In the above embodiment, the first outer-layer tab and a part of the inner-layer tab facing away from the electrode assembly, are converged and stacked toward a side at which the second outer-layer tab is located, so as to form a first stacked portion. The first stacked portion is parallel to the first direction. The first adapter portion is welded to the first stacked portion to form a first welding region. The secondary battery further includes an edge sealing piece. The edge sealing piece is at least partially disposed between the housing and the first adapter portion to form a first edge sealing region. The first welding region and the first edge sealing region are arranged along the first direction.

In the above secondary battery, the edge sealing piece is configured to seal a clearance between the housing and the first adapter portion to improve sealing performance. The first welding region and the first edge sealing region are arranged along the first direction, thereby reducing the space occupied in the thickness direction of the secondary battery and making it convenient to reduce the thickness of the secondary battery.

In one or more embodiments above, along the first direction, a total length of the first adapter portion is L; a length of the first welding region is L1; a length between an end of the first welding region facing away from the electrode assembly and an end of the first stacked portion facing away from the electrode assembly, is L2; a length between an end of the first welding region facing towards the electrode assembly and an end of the first adapter portion facing towards the electrode assembly, is L3; a length between an end of the first edge sealing region facing towards the electrode assembly and an end of the first stacked portion facing away from the electrode assembly, is L4; and a total length of the first edge sealing region is L5; satisfying: L = L1 + L2 + L3 + L4 + L5.

The length relationship satisfies at least one of the following conditions a1 to e1:
a1. 0.2 mm ≤ L1 ≤ 3 mm;
b1. 0.01 mm ≤ L2 ≤ 1.0 mm;
c1. 0.01 mm ≤ L3 ≤ 1.0 mm;
d1. 0.01 mm ≤ L4 ≤ 1.0 mm; or
e1. 3.5 mm ≤ L5 ≤ 5.5 mm.

In the above secondary battery, when (i) the length L1 of the first welding region, (ii) the length L2 between an end of the first welding region facing away from the electrode assembly and an end of the first stacked portion facing away from the electrode assembly, (iii) the length L3 between an end of the first welding region facing towards the electrode assembly and an end of the first adapter portion facing towards the electrode assembly, (iv) the length L4 between an end of the first edge sealing region facing towards the electrode assembly and an end of the first stacked portion facing away from the electrode assembly; and (v) the total length L5 of the first edge sealing region, simultaneously meet their respective length requirements, the space occupied by the first adapter portion in the length direction of the secondary battery can be reduced while the connection remains stable, thereby increasing the energy density.

In one or more embodiments above, the first adapter portion is partially folded back to form a first adapter section and a second adapter section. The second adapter section is connected to the first protruding portion. The first adapter section and the second adapter section are overlapped along the third direction. The first adapter section is connected to a surface of the second outer-layer tab facing away from the inner-layer tab, and is welded to the first stacked portion to form the first welding region.

In the above secondary battery, the first adapter portion is partially folded back to form a first adapter section and a second adapter section. The second adapter section is connected to the first protruding portion. The first adapter section and the second adapter section are overlapped along the third direction. In this way, an end of the first adapter portion facing the electrode assembly is rounded, thereby reducing the impact of the first adapter portion on the first tab group when the secondary battery is subjected to vibration or impact along the first direction.

In one or more embodiments above, an end of the first adapter section facing away from the electrode assembly, is flush with an end of the first welding region facing away from the electrode assembly.

In the above secondary battery, the end of the first adapter section facing away from the electrode assembly, is flush with the end of the first welding region facing away from the electrode assembly. In this way, the end of the first welding region facing away from the electrode assembly, is closer to the end of the first edge sealing region facing towards the electrode assembly, thereby reducing the space occupied by the first adapter portion in the first direction, and further increasing the energy density of the secondary battery.

In one or more embodiments above, along the third direction, a projection of the first adapter section lies within a projection of the second adapter section.

In the above secondary battery, the projection of the first adapter section lies within the projection of the second adapter section, thereby reducing the space occupied by the first adapter piece along the first direction, and consequently increasing the energy density of the secondary battery.

In one or more embodiments above, along the first direction, a total length of the second adapter section is S; a length of the first welding region is S1; a length between an end of the first welding region facing towards the electrode assembly and an end of the first adapter section facing towards the electrode assembly, is S2; a length between an end of the first welding region facing away from the electrode assembly and an end of the first edge sealing region facing towards the electrode assembly, is S3; and a total length of the first edge sealing region is S4, satisfying: S = S1 + S2 + S3 + S4.

The length relationship satisfies at least one of the following conditions a2 to d2:
a2. 0.2 mm ≤ S1 ≤ 3 mm;
b2. 0.01 mm ≤ S2 ≤ 1.0 mm;
c2. 0.01 mm ≤ S3 ≤ 1.0 mm; or
d2. 3.5 mm ≤ S4 ≤ 5.5 mm.

In the above secondary battery, when (i) the length S1 of the first welding region, (ii) the length S2 between an end of the first welding region facing towards the electrode assembly and an end of the first adapter section facing towards the electrode assembly, (iii) the length S3 between an end of the first welding region facing away from the electrode assembly and an end of the first edge sealing region facing towards the electrode assembly, and (iv) the total length S4 of the first edge sealing region simultaneously meet their respective length requirements, the space occupied by the first adapter portion in the length direction of the secondary battery can be further reduced while the connection remains stable, thereby increasing the energy density.

In one or more embodiments above, the secondary battery further includes a reinforcing sheet. The reinforcing sheet is connected to a surface of the first outer-layer tab facing away from the inner-layer tab, and is welded to the first stacked portion to form a second welding region.

In the above secondary battery, by connecting the reinforcing sheet to a surface of the first outer-layer tab facing away from the inner-layer tab, and welding the reinforcing sheet to the first stacked portion, the reinforcing sheet is caused to be in direct contact with the welding head or welding base, thereby alleviating the problem of low strength of connection between the first outer-layer tab and the inner-layer tab, and reducing the risk of electrical connection failure caused by concentrated tensile stress on the first outer-layer tab.

In one or more embodiments above, a thickness of the reinforcing sheet is 10 µm to 40 µm.

In the above secondary battery, the thickness of the reinforcing sheet is 10 µm to 40 µm, so as to alleviate the problem of over-melting during welding due to excessive thinness of the reinforcing sheet, and also alleviate the problem of insufficient welding stability caused by inadequate welding between the reinforcing sheet and the first outer-layer tab during welding due to excessive thickness of the reinforcing sheet.

In one or more embodiments above, a length of the second welding region is P1, and P1 = L1.

In the above secondary battery, the length of the second welding region is equal to that of the first welding region, so that the second welding region and the first welding region can be processed simultaneously on the same equipment, thereby improving processing convenience.

In one or more embodiments above, along the first direction, a length between an end of the second welding region facing away from the electrode assembly and an end of the first stacked portion facing away from the electrode assembly, is P2, satisfying: 0.01 mm ≤ P2 ≤ 1 mm.

In the above secondary battery, the length between an end of the second welding region facing away from the electrode assembly and an end of the first stacked portion facing away from the electrode assembly, is greater than or equal to 0.01 mm and less than or equal to 1 mm, thereby limiting the length of the reinforcing sheet, alleviating the problem that the secondary battery is excessively long and interferes with the edge sealing piece, and improving the safety of the secondary battery.

In one or more embodiments above, along the first direction, a distance between an end of the second welding region facing towards the electrode assembly and an end of the reinforcing sheet facing towards the electrode assembly, is P3, satisfying: 0.01 mm ≤ P3 ≤ 3 mm.

In the above secondary battery, the length between an end of the second welding region facing towards the electrode assembly and an end of the first stacked portion facing towards the electrode assembly, is greater than or equal to 0.01 mm and less than or equal to 1 mm, thereby limiting the length of the reinforcing sheet, alleviating the problem that the secondary battery is excessively long and interferes with the first tab group, and improving the safety of the secondary battery.

In one or more embodiments above, along a second direction, a width of the reinforcing sheet is Y5, and a width of the second welding region is Y1, satisfying: 0.1 mm ≤ Y5 - Y1 ≤ 5 mm, and the first direction, the second direction, and the third direction are perpendicular to each other.

In the above secondary battery, a difference between the width of the reinforcing sheet and the width of the second welding region is greater than or equal to 0.1 mm and less than or equal to 5 mm, so that the second welding region is formed inside the reinforcing sheet, thereby improving the stability of connection between the reinforcing sheet and the first stacked portion.

In one or more embodiments above, the first outer-layer tab is partially folded back to form a first tab section and a second tab section, the second tab section is connected to the electrode assembly, and the first tab section and the second tab section are overlapped along the third direction. The first tab section is disposed on one side of the second tab section facing away from the second outer-layer tab, and is welded to the first adapter portion to jointly form a first welding region.

In the above secondary battery, by partially folding back the first outer-layer tab and disposing the first tab section on one side of the second tab section facing away from the second outer-layer tab, and welding the first tab section to the first adapter portion, the first tab section is caused to be in direct contact with the welding head or the welding base, thereby alleviating the problem of low strength of connection between the second tab section and the inner-layer tab, and reducing the risk of electrical connection failure caused by concentrated tensile stress on the second tab section.

According to a second aspect, an embodiment of this application provides an electrical device. The electrical device includes the secondary battery disclosed in one or more of the above embodiments.

### BRIEF DESCRIPTION OF DRAWINGS

FIG. 1 is a schematic diagram of an overall structure of a secondary battery according to an embodiment of this application;
FIG. 2 is a structural schematic diagram of a disassembled secondary battery according to an embodiment of this application;
FIG. 3 is a structural schematic diagram of connection between a first tab group and a first adapter piece according to an embodiment of this application;
FIG. 4 is a structural schematic diagram of connection between a first tab group and a first adapter piece according to another embodiment of this application;
FIG. 5 is a structural schematic diagram of connection between a first tab group and a first adapter piece according to another embodiment of this application;
FIG. 6 is a structural top view of connection between a first tab group and a first adapter piece shown in FIG. 5;
FIG. 7 is a structural schematic diagram of connection between a first tab group and a first adapter piece according to another embodiment of this application;
FIG. 8 is a structural schematic diagram of connection between a first tab group and a first adapter piece according to another embodiment of this application; and
FIG. 9 is a structural schematic diagram of an electrical device according to an embodiment of this application.

### List of reference signs:

- 001: secondary battery
- 100: electrode assembly
- 110: first electrode plate
- 111: first current collector
- 112: first active material layer
- 120: second electrode plate
- 121: second current collector
- 122: second active material layer
- 130: separator
- 200: first tab group
- 210: first outer-layer tab
- 211: first tab section
- 212: second tab section
- 220: inner-layer tab
- 230: second outer-layer tab
- 240: first stacked portion
- 250: reinforcing sheet
- 300: second tab group
- 400: housing
- 410: accommodation cavity
- 500: first adapter piece
- 510: first protruding portion
- 520: first adapter portion
- 521: first adapter section
- 522: second adapter section
- 600: second adapter piece
- 710: first welding region
- 720: second welding region
- 730: first edge sealing region
- 800: edge sealing piece
- 900: protection adhesive tape
- 910: adhesive layer
- 910a: first adhesive layer
- 910b: second adhesive layer
- 920: substrate layer
- 002: electrical device
- X: first direction
- Y: second direction
- Z: third direction

### DETAILED DESCRIPTION

The following describes the technical solutions in some embodiments of this application with reference to the drawings hereof. Evidently, the described embodiments are merely a part of but not all of the embodiments of this application.

It is hereby noted that unless otherwise expressly specified and defined, the terms "mount", "concatenate", "connect", and "fix" need to be understood in a broad sense. For example, such terms may refer to a fixed connection, a detachable connection, or an integrated connection, and may be a mechanical connection or an electrical connection. A component considered to be "connected" to another component may be directly connected to the other component or may be connected to the other component through an intermediate component. A component considered to be "disposed on" another component may be directly disposed on the other component or may be disposed on the other component through an intermediate component.

Unless otherwise expressly specified, the term "a plurality of' used herein means two or more.

The technical terms "first" and "second" are merely intended to distinguish between different items but not intended to indicate or imply relative importance or implicitly specify the number of the indicated technical features, specific order, or order of precedence.

The term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane.

The term "parallel" is a description of an ideal state between two components. In an actual production or use state, one component may be approximately parallel to another component. For example, numerically, the term "parallel" may represent an angle of 180°±10° between two straight lines, or a dihedral angle of 180°±10° between two planes, or an angle of 180°±10° between a straight line and a plane.

The first direction X includes a forward direction of the first direction X and a direction opposite to the forward direction of the first direction X, the second direction Y includes a forward direction of the second direction Y and a direction opposite to the forward direction of the second direction Y, and the third direction Z includes a forward direction of the third direction Z and a direction opposite to the forward direction of the third direction Z.

It is hereby noted that a parameter described as being greater than, equal to, or less than a specified endpoint value means that the endpoint value allows for a tolerance of ±5%.

It is appreciated that the dimensions of each structure shown in the drawings are specified for ease of understanding and description. This application is not limited to the dimensions shown in the drawings. To make this application clear, the elements not related to the description are omitted from the details of this specification.

Unless otherwise defined, all technical and scientific terms used herein bear the same meanings as what is normally understood by a person skilled in the technical field of this application. The terms used in the specification of this application are merely intended to describe specific embodiments but not to limit this application.

An embodiment of this application provides a secondary battery. The secondary battery includes a housing, an electrode assembly, a first tab group, and a first adapter piece. The housing includes an accommodation cavity. The electrode assembly is accommodated in the accommodation cavity. The first tab group is connected to the electrode assembly. The first tab group includes a first outer-layer tab, an inner-layer tab, and a second outer-layer tab sequentially disposed along a third direction. At least one inner-layer tab is disposed. The first adapter piece includes a first protruding portion and a first adapter portion. The first protruding portion extends out of the housing along a first direction. The first adapter portion is located in the housing. When viewed along the first direction, the first adapter portion is located on one side of the second outer-layer tab facing away from the inner-layer tab. The first adapter portion is connected to the second outer-layer tab. The first direction is perpendicular to the third direction. The third direction is a thickness direction of the electrode assembly.

The first tab group includes a first outer-layer tab, an inner-layer tab, and a second outer-layer tab disposed sequentially along the third direction. The first protruding portion of the first adapter piece extends out of the housing along the first direction. The first adapter portion of the first adapter piece is connected to the second outer-layer tab to form a transition-joint welding direct-out scheme. When viewed along the first direction, the first adapter portion is located on one side of the second outer-layer tab facing away from the inner-layer tab. In this way, the first adapter piece is located on one side of the entire first tab group, the side being faced away from the first outer-layer tab along the third direction. When the secondary battery is subjected to vibration or impact along the first direction repeatedly, because the first adapter piece is located on one side of the entire first tab group, the side being faced away from the first outer-layer tab along the third direction, the first adapter portion is not prone to cause impact interference to the first tab group, thereby improving the safety of the secondary battery.

The following describes some embodiments of this application in detail with reference to drawings. To the extent that no conflict occurs, the following embodiments and the features in the embodiments may be combined with each other.

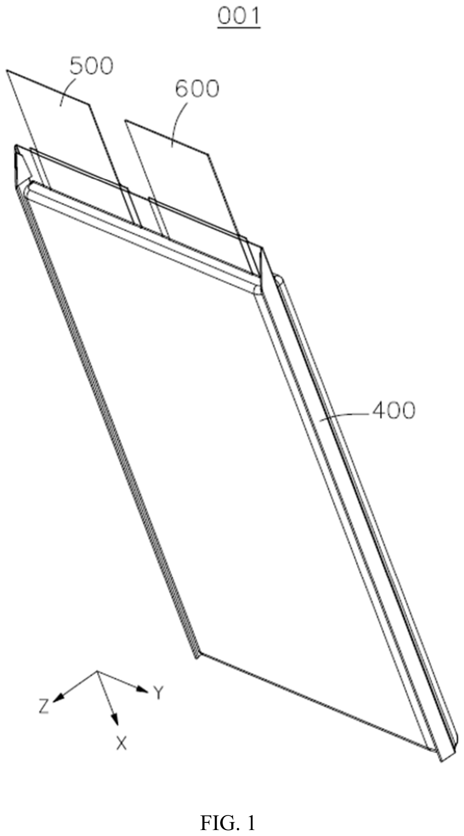

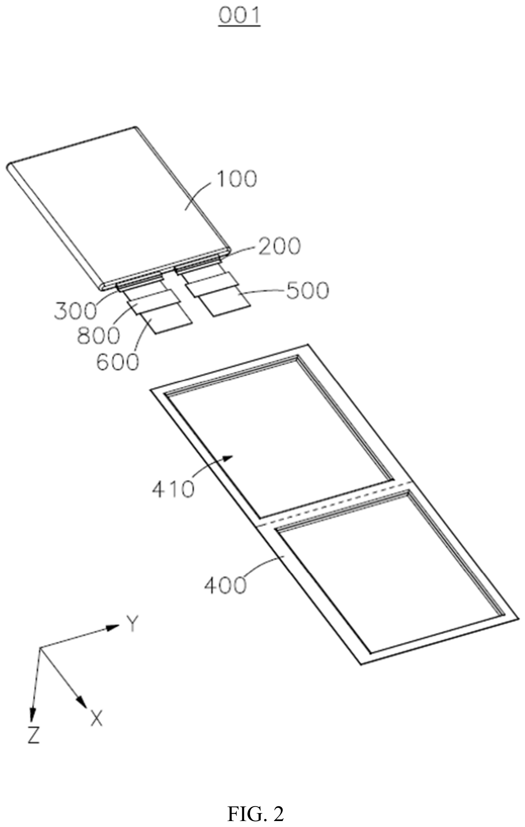

Referring to FIG. 1 and FIG. 2, an embodiment of this application provides a secondary battery 001. The secondary battery 001 includes an electrode assembly 100 and a first tab group 200. The first tab group 200 is connected to the electrode assembly 100. The secondary battery 001 further includes a second tab group 300. The second tab group 300 is connected to the electrode assembly 100. The first tab group 200 differs from the second tab group 300 in polarity.

In some embodiments, the secondary battery 001 further includes a housing 400. The housing 400 includes an accommodation cavity 410. The electrode assembly 100 is accommodated in the accommodation cavity 410 within the housing 400. The first tab group 200 is connected to a conductive first adapter piece 500. The first adapter piece 500 partially extends out of the housing 400 and is configured to be electrically connected to an external structure. The second tab group 300 is connected to a conductive second adapter piece 600. The second adapter piece 600 partially extends out of the housing 400 and is configured to be electrically connected to an external structure.

In some embodiments, the housing 400 includes at least one of a steel shell, a resin shell, or an aluminum laminated film. For example, when the secondary battery 001 is a hardshell battery, the housing 400 includes a steel shell or a resin shell. When the secondary battery 001 is a pouch battery, the housing 400 includes an aluminum laminated film.

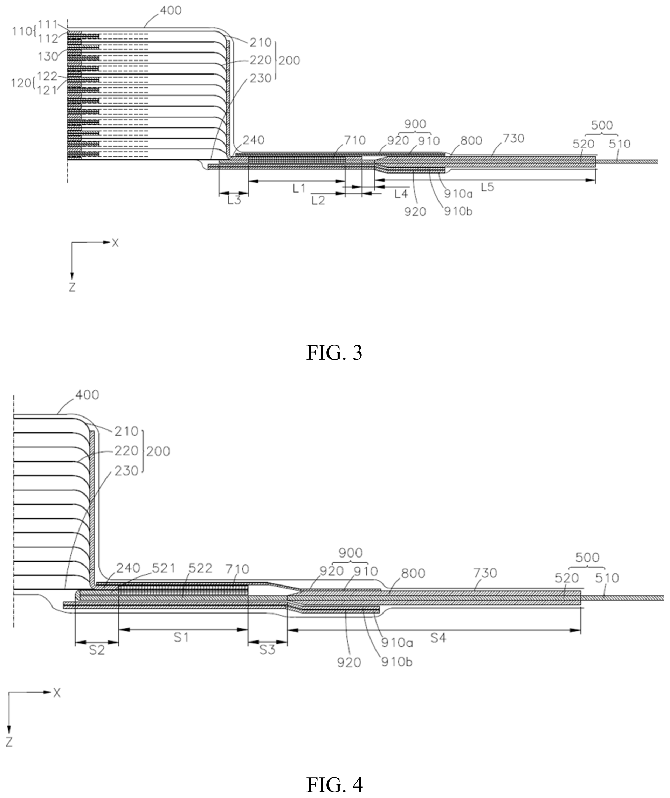

Referring to FIG. 2 and FIG. 3, in some embodiments, the electrode assembly 100 includes a first electrode plate 110, a second electrode plate 120, and a separator 130. The separator 130 is disposed between the first electrode plate 110 and the second electrode plate 120. The first electrode plate 110, the second electrode plate 120, and the separator 130 are stacked and then wound to form a jelly-roll structure.

In other embodiments, the electrode assembly 100 includes a first electrode plate 110, a second electrode plate 120, and a separator 130. The separator 130 is disposed between the first electrode plate 110 and the second electrode plate 120. The first electrode plate 110 and the second electrode plate 120 are stacked sequentially to form a stacked structure.

In some embodiments, the first tab group 200 is electrically connected to the electrode assembly 100.

In some embodiments, the first electrode plate 110 includes a first current collector 111 and a first active material layer 112 applied to a surface of the first current collector 111. The first tab group 200 is formed by extending the first current collector 111 along the width direction of the first current collector 111.

In some embodiments, the second tab group 300 is electrically connected to the electrode assembly 100.

In some embodiments, the second electrode plate 120 includes a second current collector 121 and a second active material layer 122 applied to a surface of the second current collector 121. The second tab group 300 is formed by extending the second current collector 121 along the width direction of the second current collector 121.

The following describes in detail a connection structure between the first tab group 200 and the first adapter piece 500. In some embodiments, the connection structure between the second tab group 300 and the second adapter piece 600 is the same as the connection structure between the first tab group 200 and the first adapter piece 500. In other embodiments, the connection structure between the second tab group 300 and the second adapter piece 600 is the same as the connection between the first tab group 200 and the first adapter piece 500 except dimensions.

Referring to FIG. 2 and FIG. 3, in some embodiments, the first tab group 200 is located on one side of the electrode assembly 100 along a first direction X. The first direction X is a length direction of the secondary battery 001.

In some embodiments, the first tab group 200 includes a first outer-layer tab 210, an inner-layer tab 220, and a second outer-layer tab 230 sequentially disposed along a third direction Z. At least one inner-layer tab 220 is disposed. The third direction Z is a thickness direction of the secondary battery 001. The first direction X is perpendicular to the third direction Z.

In some embodiments, N inner-layer tabs 220 are disposed, where N is a positive integer greater than or equal to 2.

In some embodiments, the first outer-layer tab 210 and the part of the inner-layer tab 220 facing away from the electrode assembly 100, are bent toward a side at which the second outer-layer tab 230 is located, and are converged and stacked together to form a first stacked portion 240.

In some embodiments, the second outer-layer tab 230 is not bent.

In some embodiments, the first adapter piece 500 includes a first protruding portion 510 and a first adapter portion 520. The first protruding portion 510 extends out of the housing 400 along the first direction X. The first adapter portion 520 is located inside the housing 400.

The first stacked portion 240 is parallel to the first direction X. The first adapter portion 520 is connected to a surface of the second outer-layer tab 230 facing away from the inner-layer tab 220, and is welded to the first stacked portion 240 to form a first welding region 710.

In some embodiments, the first tab group 200 includes a first outer-layer tab 210, an inner-layer tab 220, and a second outer-layer tab 230 sequentially disposed along a third direction Z. The first outer-layer tab 210 and the part of the inner-layer tab 220 facing away from the electrode assembly 100, are converged and stacked toward a side at which the second outer-layer tab 230 is located, so as to form a first stacked portion 240. The first stacked portion 240 is parallel to the first direction X. After the first stacked portion 240 is connected to the first adapter piece 500, the first protruding portion 510 of the first adapter piece 500 extends out of the housing 400 along the first direction X to form a transition-joint welding direct-out scheme. The first outer-layer tab 210 and the part of the inner-layer tab 220 facing away from the electrode assembly 100, are converged toward the side at which the second outer-layer tab 230 is located, and the first adapter portion 520 is connected to a surface of the second outer-layer tab 230 facing away from the inner-layer tab 220, so that the first adapter piece 500 is located on a side of the entire first tab group 200, the side being faced away from the first outer-layer tab 210 along the third direction Z. Therefore, when the secondary battery 001 is subjected to vibration or impact along the first direction X repeatedly, the first stacked portion 240 is straightened along the first direction X, because the first adapter piece 500 is located on a side of the entire first tab group 200, the side being faced away from the first outer-layer tab 210 along the third direction Z, the first adapter portion 520 is not prone to cause impact interference to the first tab group 200, thereby improving the safety of the secondary battery 001.

In some embodiments, the secondary battery 001 further includes an edge sealing piece 800. The edge sealing piece 800 is at least partially disposed between the housing 400 and the first adapter portion 520 to form a first edge sealing region 730. The first welding region 710 and the first edge sealing region 730 are arranged along the first direction X.

In some embodiments, the edge sealing piece 800 is a tab adhesive.

In some embodiments, along the first direction X, the length of the first welding region 710 is L1, satisfying: 0.2 mm ≤ L1 ≤ 3 mm.

In some embodiments, along the first direction, a length between an end of the first welding region 710 facing away from the electrode assembly 100 and an end of the first stacked portion 240 facing away from the electrode assembly 100, is L2, satisfying: 0.01 mm ≤ L2 ≤ 1.0 mm.

In some embodiments, along the first direction X, a length between an end of the first welding region 710 facing towards the electrode assembly 100 and an end of the first adapter portion 520 facing towards the electrode assembly 100, is L3, satisfying: 0.01 mm ≤ L3 ≤ 1.0 mm.

In some embodiments, along the first direction X, a length between an end of the first edge sealing region 730 facing towards the electrode assembly 100 and an end of the first stacked portion 240 facing away from the electrode assembly 100, is L4, satisfying: 0.01 mm ≤ L4 ≤ 1.0 mm.

In some embodiments, along the first direction X, a total length of the first edge sealing region 730 is L5, satisfying: 3.5 mm ≤ L5 ≤ 5.5 mm.

In some embodiments, along the first direction X, a total length of the first adapter portion 520 is L, satisfying: L = L1 + L2 + L3 + L4 + L5. The length between the end of the first welding region 710 facing towards the electrode assembly 100 and the end of the first adapter portion 520 facing towards the electrode assembly 100, can share space in the first direction X with a bent part of the tabs in the first tab group 200. At the same time, the end of the first adapter portion 520 facing towards the electrode assembly 100, can extend to, and be accommodated in, a region on a side of the first stacked portion 240 facing towards the electrode assembly 100, without occupying the overall thickness of the battery cell, thereby increasing the energy density of the secondary battery 001.

In some embodiments, two surfaces of the first welding region 710 are covered with a protection piece separately.

In some embodiments, the protection piece is a protection adhesive tape 900.

In some embodiments, the protection adhesive tape 900 includes an adhesive layer 910 and a substrate layer 920. One side of the adhesive layer 910 is bonded to the first welding region 710, and the other side of the adhesive layer 910 is bonded to the substrate layer 920. The substrate layer 920 is in contact with the housing 400 correspondingly to play an isolation and insulation role.

In some embodiments, the protection adhesive tape 900 includes a first adhesive layer 910a, a substrate layer 920, and a second adhesive layer 910b. The substrate layer 920 is disposed between the first adhesive layer 910a and the second adhesive layer 910b. The first adhesive layer 910a is bonded to the first welding region 710, and the first adhesive layer 910a is bonded to the housing 400, thereby playing the role of fixing the relative position between the first welding region 710 and the housing 400 while playing the role of isolation and insulation, and improving the position stability of the first welding region 710.

Referring to FIG. 2 and FIG. 4, in some embodiments, the first adapter portion 520 is partially folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form a first welding region 710.

In some embodiments, a projection of the first adapter section 521 lies within a projection of the second adapter section 522. In other words, along the first direction X, the length of the first adapter section 521 is less than the length of the second adapter section 522.

In some embodiments, an end of the first adapter section 521 facing away from the electrode assembly 100, is flush with an end of the first welding region 710 facing away from the electrode assembly 100. It is worth noting that the "flush" means that, along the first direction X, the distance between the end of the first adapter section 521 facing away from the electrode assembly 100 and the end of the first welding region 710 facing away from the electrode assembly 100, approximates 0 mm to 1.0 mm; and/or, along the first direction X, the distance between the end of the first stacked portion 240 facing away from the electrode assembly 100 and the end of the first welding region 710 facing away from the electrode assembly 100, approximates 0 mm to 1.0 mm.

Before being folded back, the first adapter piece 500 is welded to the first stacked portion 240 to form the first welding region 710. Subsequently, the first adapter piece 500 and the side of the first stacked portion 240 facing away from the electrode assembly 100, are cut flat. A tolerance of a distance from the cutting position to the first welding region 710 is designed to be -1.0 mm to 1.0 mm. Subsequently, the first adapter piece 500 is folded back.

In some embodiments, along the first direction X, the length of the first welding region 710 is S1, satisfying: 0.2 mm ≤ S1 ≤ 3 mm.

In some embodiments, along the first direction X, a length between an end of the first welding region 710 facing towards the electrode assembly 100 and an end of the first adapter section 522 facing towards the electrode assembly 100, is S2, satisfying: 0.01 mm ≤ S2 ≤ 1.0 mm.

In some embodiments, along the first direction X, a length between an end of the first welding region 710 facing away from the electrode assembly 100 and an end of the first edge sealing region 730 facing towards the electrode assembly 100, is S3, satisfying: 0.01 mm ≤ S3 ≤ 1.0 mm.

In some embodiments, along the first direction X, a total length of the first edge sealing region 730 is S4, satisfying: 3.5 mm ≤ S4 ≤ 5.5 mm.

In some embodiments, along the first direction X, a total length of the second adapter section 522 is S, satisfying: S = S1 + S2 + S3 + S4. The end of the first adapter section 521 facing away from the electrode assembly 100, is flush with the end of the first welding region 710 facing away from the electrode assembly 100. In this way, the end of the first welding region 710 facing away from the electrode assembly 100, is closer to the end of the first edge sealing region 730 facing towards the electrode assembly 100, thereby further increasing the energy density of the secondary battery 001.

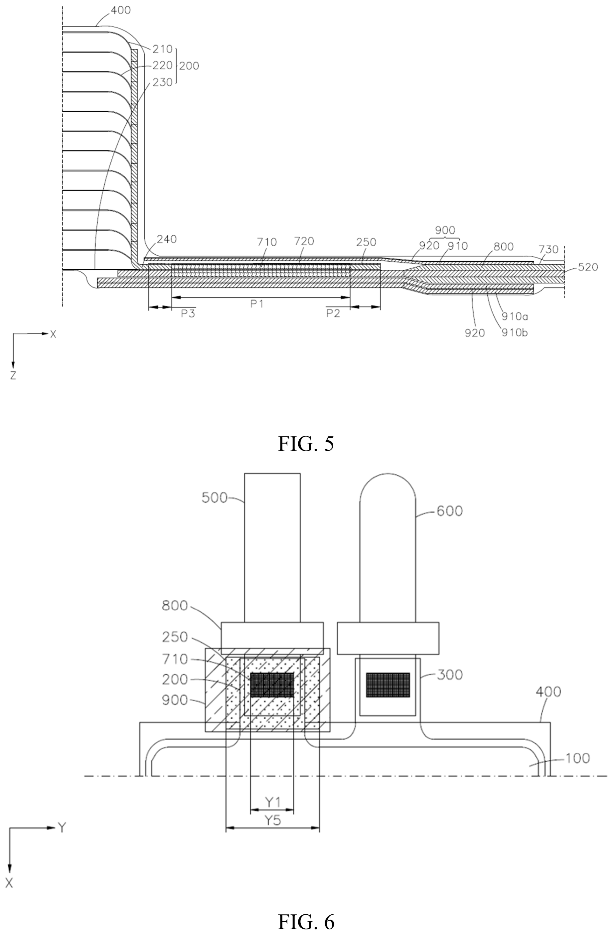

Referring to FIG. 2 and FIG. 5, in some embodiments, the secondary battery 001 further includes a reinforcing sheet 250. The reinforcing sheet 250 is connected to a surface of the first outer-layer tab 210 facing away from the inner-layer tab 220, and is welded to the first stacked portion 240 to form a second welding region 720. During welding of the first outer-layer tab 210, due to direct contact with the welding head or the welding base, the strength of connection between the first outer-layer tab 210 and the inner-layer tab 220 is relatively low. By connecting the reinforcing sheet 250 to a surface of the first outer-layer tab 210 facing away from the inner-layer tab 220, and welding the reinforcing sheet to the first stacked portion 240, the reinforcing sheet 250 is caused to be in direct contact with the welding head or welding base, thereby alleviating the problem of low strength of connection between the first outer-layer tab 210 and the inner-layer tab 220, and reducing the risk of electrical connection failure caused by concentrated tensile stress on the first outer-layer tab 210.

In some embodiments, along the first direction X, a length of the second welding region 720 is P1, and P1 = L1, that is, the length of the second welding region 720 is equal to the length of the first welding region 710.

In some embodiments, along the first direction X, a length between an end of the second welding region 720 facing away from the electrode assembly 100 and an end of the first stacked portion 240 facing away from the electrode assembly 100, is P2, satisfying: 0.01 mm ≤ P2 ≤ 1 mm.

In some embodiments, along the first direction X, a distance between an end of the second welding region 720 facing towards the electrode assembly 100 and an end of the reinforcing sheet 250 facing towards the electrode assembly 100, is P3, satisfying: 0.01 mm ≤ P3 ≤ 3 mm.

In some embodiments, a thickness of the reinforcing sheet 250 is 10 µm to 40 µm.

Referring to FIG. 2, FIG. 5, and FIG. 6, in some embodiments, along the second direction Y, the width of the reinforcing sheet 250 is Y5, and the width of the second welding region 720 is Y1, satisfying: 0.1 mm ≤ Y5 - Y1 ≤ 5 mm. The second direction Y is the width direction of the secondary battery 001, and the first direction X, the second direction Y, and the third direction Z are perpendicular to each other.

Along the second direction Y, a difference between the width of the reinforcing sheet 250 and the width of the second welding region 720 is greater than or equal to 0.1 mm and less than or equal to 5 mm, so that the second welding region 720 is formed inside the reinforcing sheet 250, thereby improving the stability of connection between the reinforcing sheet 250 and the first stacked portion 240.

In some embodiments, the material of the reinforcing sheet 250 is the same as the material of the first tab group 200.

In some embodiments, the first electrode plate 110 is a positive electrode plate, and the reinforcing sheet 250 is made of aluminum foil.

In some embodiments, the first electrode plate 110 is a negative electrode plate, and the reinforcing sheet 250 is made of copper foil or nickel foil.

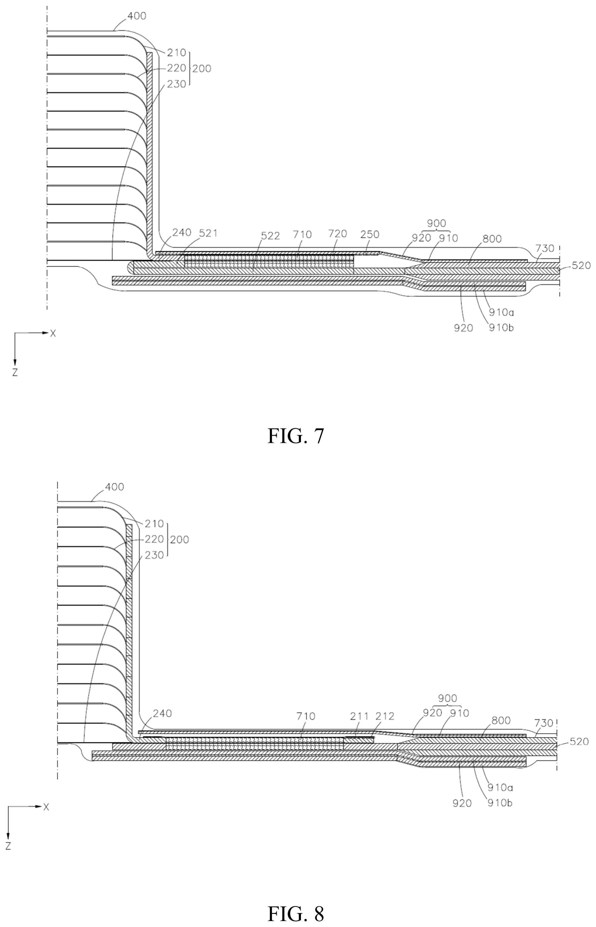

Referring to FIG. 2 and FIG. 7, in some embodiments, the first adapter portion 520 is partially folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form a first welding region 710.

The secondary battery 001 further includes a reinforcing sheet 250. The reinforcing sheet 250 is connected to a surface of the first outer-layer tab 210 facing away from the inner-layer tab 220, and is welded to the first stacked portion 240 to form a second welding region 720.

The end of the first adapter section 521 facing away from the electrode assembly 100, is flush with the end of the first welding region 710 facing away from the electrode assembly 100. In this way, the end of the first welding region 710 facing away from the electrode assembly 100, is closer to the end of the first edge sealing region 730 facing towards the electrode assembly 100, thereby further increasing the energy density of the secondary battery 001. By connecting the reinforcing sheet 250 to a surface of the first outer-layer tab 210 facing away from the inner-layer tab 220, and welding the reinforcing sheet to the first stacked portion 240, the reinforcing sheet 250 is caused to be in direct contact with the welding head or welding base, thereby alleviating the problem of low strength of connection between the first outer-layer tab 210 and the inner-layer tab 220, and reducing the risk of electrical connection failure caused by concentrated tensile stress on the first outer-layer tab 210.

Referring to FIG. 2 and FIG. 8, in some embodiments, the first outer-layer tab 210 is partially folded back to form a first tab section 211 and a second tab section 212. The second tab section 212 is connected to the electrode assembly 100. The first tab section 211 and the second tab section 212 are overlapped along the third direction Z.

The first tab section 211 is disposed on one side of the second tab section 212 facing away from the second outer-layer tab 230, and is welded to the first adapter portion 520 to jointly form a first welding region 710. During welding of the first outer-layer tab 210, due to direct contact with the welding head or the welding base, the strength of connection between the first outer-layer tab 210 and the inner-layer tab 220 is relatively low. By partially folding back the first outer-layer tab 210 and disposing the first tab section 211 on one side of the second tab section 212 facing away from the second outer-layer tab 230, and welding the first tab section to the first adapter portion 520, the first tab section 211 is caused to be in direct contact with the welding head or the welding base, thereby alleviating the problem of low strength of connection between the second tab section 212 and the inner-layer tab 220, and reducing the risk of electrical connection failure caused by concentrated tensile stress on the second tab section 212.

In some embodiments, along the first direction X, the length of the first tab section 211 is greater than the length of the first welding region 710, so that the first welding region 710 is formed inside the first tab section 211, thereby improving the stability of connection between the first tab section 211 and the first stacked portion 240.

Referring to FIG. 2, FIG. 4, and FIG. 8, in some embodiments, the first adapter portion 520 is partially folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, , and is welded to the first stacked portion 240 to form a first welding region 710.

The first outer-layer tab 210 is partially folded back to form a first tab section 211 and a second tab section 212. The second tab section 212 is connected to the electrode assembly 100. The first tab section 211 and the second tab section 212 are overlapped along the third direction Z.

The first tab section 211 is disposed on one side of the second tab section 212 facing away from the second outer-layer tab 230, and is welded to the first adapter portion 520 to jointly form a first welding region 710.

In the above process, the first outer-layer tab 210 is partially folded back first to form a first tab section 211 and a second tab section 212. Before being folded back, the first adapter piece 500 is welded to the first stacked portion 240 to form the first welding region 710. Subsequently, the first adapter piece 500 and the side of the first stacked portion 240 facing away from the electrode assembly 100, are cut flat. A tolerance of a distance from the cutting position to the first welding region 710 is designed to be -1.0 mm to 1.0 mm. Subsequently, the first adapter piece 500 is folded back.

The end of the first adapter section 521 facing away from the electrode assembly 100, is flush with the end of the first welding region 710 facing away from the electrode assembly 100. In this way, the end of the first welding region 710 facing away from the electrode assembly 100, is closer to the end of the first edge sealing region 730 facing towards the electrode assembly 100, thereby further increasing the energy density of the secondary battery 001. By partially folding back the first outer-layer tab 210 and disposing the first tab section 211 on one side of the second tab section 212 facing away from the second outer-layer tab 230, and welding the first tab section to the first adapter portion 520, the first tab section 211 is caused to be in direct contact with the welding head or the welding base, thereby alleviating the problem of low strength of connection between the second tab section 212 and the inner-layer tab 220, and reducing the risk of electrical connection failure caused by concentrated tensile stress on the second tab section 212.

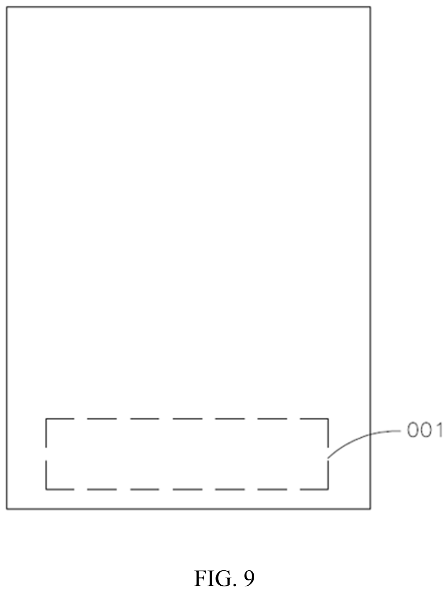

Referring to FIG. 9, an embodiment of this application further provides an electrical device 002 that includes the secondary battery 001 disclosed in one or more of the above embodiments.

To verify how the position of the first adapter piece 500 and the connection structure affect the safety of the tabs in the secondary battery 001, the following tests are performed:
(1) Drop test: 10 secondary batteries 001 are tested in each comparative embodiment and each embodiment. The secondary batteries 001 in the embodiment and the comparative embodiment are dropped from a height of 1.5 meters, and then the secondary batteries 001 are disassembled. The tabs in the first tab group 200 are visually inspected to check whether the tabs are loose, and are observed through a microscope to check whether the tabs are broken or cracked.
(2) Cycle test: After 10 secondary batteries 001 are subjected to a drop test in each comparative embodiment and each embodiment, each secondary battery 001 is subjected to a cycle test. Each secondary battery 001 is left to stand in a 25 °C environment for 30 minutes, and then charged and discharged in the following steps. The secondary battery is charged at a constant current of 5C until the voltage reaches 4.2 V, and then charged at a constant current of 4C until the voltage reaches 4.3 V, and then charged at a constant current of 3C until the voltage reaches 4.45 V, and then charged at a constant voltage of 4.45 V until the current drops to 0.05C. The secondary battery is left to stand for 5 minutes, and then discharged at a constant current of 1C until the voltage drops to 3 V, and then left to stand for 5 minutes, thereby completing one cycle. The secondary battery is cycled for 1000 cycles according to the above cycling steps. After the cycle test is completed, the capacity retention rate of a single secondary battery 001 is calculated. The capacity retention rate is a ratio of the discharge capacity at the end of 1000 cycles to the first-cycle discharge capacity. The capacity retention rates of the 10 secondary batteries 001 in each comparative embodiment and each embodiment at the end of 1000 cycles are recorded, and are averaged out.

The following describes the specific implementations of the secondary batteries 001 in each embodiment and each comparative embodiment.

### Embodiment 1

A secondary battery 001 is assembled in the following process:
(1) Preparing a negative electrode plate: Mixing artificial graphite as a negative active material, conductive carbon black (Super P), and styrene-butadiene rubber (SBR) at a mass ratio of 96 : 1.5 : 2.5, and adding deionized water as a solvent to formulate a negative active material slurry in which the mass percent of the solid is 70 wt%, and stirring the slurry well for future use. Using 10 µm-thick copper foil as a negative current collector. Applying the negative active material slurry evenly to one surface of the negative current collector along a thickness direction thereof by using a slot-die coating machine. Reserving a blank foil region uncoated with the negative active material layer at one end of the negative current collector in the width direction. Oven-drying the current collector at 110 °C to obtain a negative electrode plate substrate coated with the negative active material layer on a single side. Subsequently, repeating the above steps on the other side of the negative current collector along the thickness direction thereof, and reserving a blank foil region uncoated with the negative active material layer at one end of the negative current collector in the width direction to obtain a negative electrode plate substrate coated with the negative active material layer on both sides, where the compaction density of the negative active material layer is 1.70 g/cm³. Die-cutting the negative electrode plate substrate by using a die and a die cutter, so as to obtain a single negative electrode plate, with negative tabs being formed in the blank foil region uncoated with the negative active material layer, where the number of disposed negative tabs is plural.
(2) Preparing a positive electrode plate: Mixing lithium cobalt oxide (LiCoO₂) as a positive active material, conductive carbon black (super P), and polyvinylidene fluoride (PVDF) at a mass ratio of 97.5 : 1.0 : 1.5, and adding N-methyl pyrrolidone (NMP) as a solvent to formulate a positive active material slurry in which the solid content is 75 wt%, and stirring the slurry well for future use. Using 10 µm-thick aluminum foil as a positive current collector. Applying the positive active material slurry evenly to one surface of the positive current collector along a thickness direction thereof by using a slot-die coating machine. Reserving a blank foil region uncoated with the positive active material layer at one end of the positive current collector in the width direction. Oven-drying the current collector at 90 °C to obtain a positive electrode plate substrate coated with the positive active material layer on a single side. Subsequently, repeating the above steps on the other side of the positive current collector along the thickness direction thereof, and reserving a blank foil region uncoated with the positive active material layer at one end of the positive current collector in the width direction to obtain a positive electrode plate substrate coated with the positive active material layer on both sides. Die-cutting the positive electrode plate substrate by using a die and a die-cutter, so as to obtain a single positive electrode plate, with positive tabs being formed in the blank foil region uncoated with the positive active material layer, where the number of the disposed positive tabs is plural.
(3) Preparing an electrolyte solution: Mixing ethylene carbonate (EC), ethyl methyl carbonate (EMC), and diethyl carbonate (DEC) at a weight ratio of EC : EMC : DEC = 30 : 50 : 20 in an dry argon atmosphere to form a base organic solvent, then adding lithium salt hexafluorophosphate (LiPF₆) into the base organic solvent to dissolve, and mixing the solution evenly to obtain an electrolyte solution in which a lithium salt concentration is 1.15 mol/L and the conductivity is 8.0 S/m.
(4) Preparing a separator 130: Using a three-layer separator 130 with a thickness of 5 µm, where the separator includes a first adhesive layer, a first substrate layer 920, and a second adhesive layer stacked together. The first substrate layer 920 is made of polyethylene (PE). The first adhesive layer and the second adhesive layer each contain a first binder and boehmite.
(5) Preparing an electrode assembly 100: Stacking one layer of first electrode plate 110, one layer of separator 130, and one layer of second electrode plate 120 along a third direction Z to form a jelly-roll layer, and then winding the jelly-roll layer to form a jelly-roll structure. After the winding, the tabs on the first electrode plate 110 form a first tab group 200. The first tab group 200 includes a first outer-layer tab 210, an inner-layer tab 220, and a second outer-layer tab 230 sequentially disposed along a third direction Z. A plurality of inner-layer tabs 220 are disposed. Bending the first outer-layer tab 210 and the part of the inner-layer tab 220 facing away from the electrode assembly 100, toward a side at which the second outer-layer tab 230 is located, and converging and stacking them together to form a first stacked portion 240, without bending the second outer-layer tab 230. The first adapter piece 500 includes a first protruding portion 510 and a first adapter portion 520. The first adapter portion 520 is connected to a surface of the second outer-layer tab 230 facing away from the inner-layer tab 220, and is welded to the first stacked portion 240 to form a first welding region 710 (briefly referred to as "below the first stacked portion 240" in the table).
(6) Assembling the electrode assembly 100: Placing an aluminum laminated film, which is stamped to form a cavity, into an assembly jig, with the cavity side facing upward. Placing the electrode assembly 100 into the cavity, and pressing the film tightly by exerting an external force. Subsequently, overlaying the electrode assembly 100 with another punchmolded aluminum laminated film, with the cavity side facing downward. Heat-sealing the periphery of the two aluminum laminated films by hot pressing to obtain an assembled electrode assembly 100.
(7) Electrolyte injection and sealing: Injecting an electrolyte solution into the assembled electrode assembly 100, and performing steps such as vacuum sealing, static standing, hot-pressing, chemical formation, and shaping to obtain a secondary battery 001.

Comparative Embodiment 1: Bending the first outer-layer tab 210 and the part of the inner-layer tab 220 facing away from the electrode assembly 100, toward a side at which the second outer-layer tab 230 is located, and converging and stacking them together to form a first stacked portion 240, without bending the second outer-layer tab 230. The difference from Embodiment 1 is that the first adapter portion 520 is connected to a surface of the first outer-layer tab 210 facing away from the inner-layer tab 220, and is welded to the first stacked portion 240 (briefly referred to as "above the first stacked portion 240" in the table).

### Embodiment 2

The difference from Embodiment 1 is that before being folded back, the first adapter piece 500 is welded to the first stacked portion 240 to form the first welding region 710, and then the first adapter piece 500 and the side of the first stacked portion 240 facing away from the electrode assembly 100, are cut flat, where a tolerance of a distance from the cutting position to the first welding region 710 is designed to be -1.0 mm to 1.0 mm. Subsequently, the first adapter piece 500 is folded back to form a first adapter section 521 and a second adapter section 522. The second adapter section 522 is connected to the first protruding portion 510. The first adapter section 521 and the second adapter section 522 are overlapped along the third direction Z. Along the first direction X, the first adapter section 521 and the second adapter section 522 overlap by a length C1. The first adapter section 521 is connected to a surface of the second outer-layer tab 230 facing away from the inner-layer tab 220, and is welded to the first stacked portion 240 to form a first welding region 710.

### Embodiment 3

The difference from Embodiment 1 is that the reinforcing sheet 250 is connected to a surface of the first outer-layer tab 210 facing away from the inner-layer tab 220, and is welded to the first stacked portion 240 to form a second welding region 720.

### Embodiment 4

The difference from Embodiment 3 is that before being folded back, the first adapter piece 500 is welded to the first stacked portion 240 to form the first welding region 710, and then the first adapter piece 500 and the side of the first stacked portion 240 facing away from the electrode assembly 100, are cut flat, where a tolerance of a distance from the cutting position to the first welding region 710 is designed to be -1.0 mm to 1.0 mm. Subsequently, the first adapter piece 500 is folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form a first welding region 710.

### Embodiment 5

The difference from Embodiment 1 is that the first outer-layer tab 210 is partially folded back to form a first tab section 211 and a second tab section 212. The second tab section 212 is connected to the electrode assembly 100. The first tab section 211 and the second tab section 212 are overlapped along the third direction Z. The first tab section 211 is disposed on one side of the second tab section 212 facing away from the second outer-layer tab 230, and is welded to the first adapter portion 520 to jointly form a first welding region 710. Along the first direction X, the first tab section 211 and the second tab section 212 overlap by a length C2.

### Embodiment 6

The difference from Embodiment 5 is that before being folded back, the first adapter piece 500 is welded to the first stacked portion 240 to form the first welding region 710, and then the first adapter piece 500 and the side of the first stacked portion 240 facing away from the electrode assembly 100, are cut flat, where a tolerance of a distance from the cutting position to the first welding region 710 is designed to be -1.0 mm to 1.0 mm. Subsequently, the first adapter piece 500 is folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form a first welding region 710.

The main parameters and test results of each embodiment and comparative embodiment are shown in Table 1:

**Table 1**

| Scheme | Position of first adapter piece | L1 (mm) | L2 (mm) | L3 (mm) | L4 (mm) | L5 (mm) | C1 (mm) | P1 (mm) | C2 (mm) | Average energy density (Wh/L) | Average capacity retention rate (%) |
|---|---|---|---|---|---|---|---|---|---|---|---|
| Comparative Embodiment 1 | Above the first stacked portion | 0.7 | 0.3 | 0.3 | 0.3 | 4.5 | / | / | / | Conventional | 78% |
| Embodiment 1 | Below the first stacked portion | 0.7 | 0.3 | 0.3 | 0.3 | 4.5 | / | / | / | ↑0.5% | 82% |
| Embodiment 2 | Below the first stacked portion | 0.7 | 0 | 0.3 | 0.3 | 4.5 | 1.0 | / | / | ↑1.2% | 84% |
| Embodiment 3 | Below the first stacked portion | 0.7 | 0.3 | 0.3 | 0.3 | 4.5 | / | 0.7 | / | ↑0.5% | 85% |
| Embodiment 4 | Below the first stacked portion | 0.7 | 0 | 0.3 | 0.3 | 4.5 | 1.0 | 0.7 | / | ↑1.2% | 84% |
| Embodiment 5 | Below the first stacked portion | 0.7 | 0.3 | 0.3 | 0.3 | 4.5 | / | / | 0.9 | ↑0.5% | 86% |
| Embodiment 6 | Below the first stacked portion | 0.7 | 0 | 0.3 | 0.3 | 4.5 | 1.0 | / | 0.9 | ↑1.2% | 86% |

| | | | | | | | | | | | |
|---|---|---|---|---|---|---|---|---|---|---|---|
| Note: "/" means no value. | | | | | | | | | | | |

In Embodiment 1, in contrast to Comparative Embodiment 1, the first adapter portion 520 is connected to a surface of the second outer-layer tab 230 facing away from the inner-layer tab 220, and is welded to the first stacked portion 240. Because the first adapter portion 520 is offset toward the electrode assembly 100, the energy density is increased by approximately 0.5%. When the secondary battery 001 is subjected to repeated vibrations or impacts along the first direction X, the first adapter piece 520 is located on one side of the entire first tab group 200, the side being faced away from the first outer-layer tab 210 along the third direction Z. In this way, the first adapter portion 520 is not prone to cause impact interference to the first tab group, thereby enhancing the safety of the first tab group 200. In this embodiment, during a cycle test after 10 secondary batteries 001 undergo a drop test, the risk of battery failure caused by the interference of the first tab group 200 is reduced, and the average capacity retention rate increases from 78% to 82%, with the improvement being significant.

In Embodiment 2, in contrast to Embodiment 1, the first adapter portion 520 is partially folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form the first welding region 710. The end of the first adapter section 521 facing away from the electrode assembly 100, is flush with the end of the first welding region 710 facing away from the electrode assembly 100. Therefore, the length between the end of the first welding region 710 facing away from the electrode assembly 100 and the end of the first stacked portion 240 facing away from the electrode assembly 100, approximates 0, thereby further saving the space in the first direction, and consequently increasing the energy density by 1.2%. After the first adapter section 521 and the second adapter section 522 are overlapped along the third direction Z, in contrast to Embodiment 1, the stability of connection between the first adapter portion 520 and the first stacked portion 240 is similar, and the average capacity retention rate is increased from 82% to 84%, with the improvement being insignificant.

In Embodiment 3, in contrast to Embodiment 1, the reinforcing sheet 250 is connected to a surface of the first outer-layer tab 210 facing away from the inner-layer tab 220, and is welded to the first stacked portion 240 to form a second welding region 720. In this way, during welding of the first outer-layer tab 210, the reinforcing sheet 250 is in direct contact with the welding head or welding base, thereby alleviating the problem of low strength of connection between the first outer-layer tab 210 and the inner-layer tab 220, and reducing the risk of electrical connection failure caused by concentrated tensile stress on the first outer-layer tab 210. The stability of connection between the first adapter portion 520 and the first stacked portion 240 is further improved, and the average capacity retention rate is increased from 82% to 85%, with the improvement being significant.

In Embodiment 4, in contrast to Embodiment 3, the first adapter portion 520 is partially folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form the first welding region 710. The end of the first adapter section 521 facing away from the electrode assembly 100, is flush with the end of the first welding region 710 facing away from the electrode assembly 100. Therefore, the length between the end of the first welding region 710 facing away from the electrode assembly 100 and the end of the first stacked portion 240 facing away from the electrode assembly 100, approximates 0, thereby further saving the space in the first direction, and consequently increasing the energy density by 1.2% versus 0.5%, with the improvement being significant.

In Embodiment 5, in contrast to Embodiment 1, the first outer-layer tab 210 is partially folded back to form a first tab section 211 and a second tab section 212. The second tab section 212 is connected to the electrode assembly 100. The first tab section 211 and the second tab section 212 are overlapped along the third direction Z. During welding of the first outer-layer tab 210, the first tab section 211 is in direct contact with the welding head or the welding base, thereby alleviating the problem of low strength of connection between the second tab section 212 and the inner-layer tab 220, reducing the risk of electrical connection failure caused by concentrated tensile stress on the second tab section 212. The stability of connection between the first adapter portion 520 and the first stacked portion 240 is further improved. The average capacity retention rate is increased from 82% to 86%, with the improvement being significant.

In Embodiment 6, in contrast to Embodiment 5, the first adapter portion 520 is partially folded back to form a first adapter section 521 and a second adapter section 522. The second adapter section 522 is connected to the first protruding portion 510. The first adapter section 521 and the second adapter section 522 are overlapped along the third direction Z. The first adapter section 521 is connected to a surface of the second outer-layer tab 230 facing away from the inner-layer tab 220, and is welded to the first stacked portion 240 to form the first welding region 710. The end of the first adapter section 521 facing away from the electrode assembly 100, is flush with the end of the first welding region 710 facing away from the electrode assembly 100. Therefore, the length between the end of the first welding region 710 facing away from the electrode assembly 100 and the end of the first stacked portion 240 facing away from the electrode assembly 100, approximates 0, thereby further saving the space in the first direction, and consequently increasing the energy density by 1.2% versus 0.5%, with the improvement being significant.

In addition, a person of ordinary skill in the art understands that the foregoing embodiments are merely intended to illustrate this application, but not intended to limit this application. Any and all appropriate modifications and changes made to the embodiments without departing from the essence of this application still fall within the protection scope of this application.

## Claims

1. A secondary battery (001), **characterized in that** the secondary battery (001) comprises:
a housing (400), wherein the housing (400) comprises an accommodation cavity (410);
an electrode assembly (100), wherein the electrode assembly (100) is accommodated in the accommodation cavity (410);
a first tab group (200), wherein the first tab group (200) is connected to the electrode assembly (100); the first tab group (200) comprises a first outer-layer tab (210), an inner-layer tab (220), and a second outer-layer tab (230) sequentially disposed along a third direction (Z); and
a first adapter piece (500), wherein the first adapter piece (500) comprises a first protruding portion (510) and a first adapter portion (520); the first protruding portion (510) extends out of the housing (400) along a first direction (X); the first adapter portion (520) is located in the housing (400); when viewed along the first direction (X), the first adapter portion (520) is located on one side of the second outer-layer tab (230) facing away from the inner-layer tab (220); the first adapter portion (520) is connected to the second outer-layer tab (230); the first direction (X) is perpendicular to the third direction (Z); and the third direction (Z) is a thickness direction of the electrode assembly (100).

2. The secondary battery (001) according to claim 1, **characterized in that** the first outer-layer tab (210) and a part of the inner-layer tab (220) facing away from the electrode assembly (100), are converged and stacked toward a side at which the second outer-layer tab (230) is located, so as to form a first stacked portion (240); the first stacked portion (240) is parallel to the first direction (X); the first adapter portion (520) is welded to the first stacked portion (240) to form a first welding region (710); the secondary battery (001) further comprises an edge sealing piece (800); the edge sealing piece (800) is at least partially disposed between the housing (400) and the first adapter portion (520) to form a first edge sealing region (730); and the first welding region (710) and the first edge sealing region (730) are arranged along the first direction (X).

3. The secondary battery (001) according to claim 2, **characterized in that**, along the first direction (X), a total length of the first adapter portion (520) is L; a length of the first welding region (710) is L1; a length between an end of the first welding region (710) facing away from the electrode assembly (100) and an end of the first stacked portion (240) facing away from the electrode assembly (100), is L2; a length between an end of the first welding region (710) facing towards the electrode assembly (100) and an end of the first adapter portion (520) facing towards the electrode assembly (100), is L3; a length between an end of the first edge sealing region (730) facing towards the electrode assembly (100) and an end of the first stacked portion (240) facing away from the electrode assembly (100), is L4; and a total length of the first edge sealing region (730) is L5, satisfying: L = L1 + L2 + L3 + L4 + L5;
wherein a length relationship satisfies at least one of the following conditions a1 to e1:
a1. 0.2 mm ≤ L1 ≤ 3 mm;
b1. 0.01 mm ≤ L2 ≤ 1.0 mm;
c1. 0.01 mm ≤ L3 ≤ 1.0 mm;
d1. 0.01 mm ≤ L4 ≤ 1.0 mm; or
e1. 3.5 mm ≤ L5 ≤ 5.5 mm.

4. The secondary battery (001) according to claim 2 or 3, **characterized in that** the first adapter portion (520) is partially folded back to form a first adapter section (521) and a second adapter section (522), the second adapter section (522) is connected to the first protruding portion (510), and the first adapter section (521) and the second adapter section (522) are overlapped along the third direction (Z); and the first adapter section (521) is connected to a surface of the second outer-layer tab (230) facing away from the inner-layer tab (220), and is welded to the first stacked portion (240) to form the first welding region (710).

5. The secondary battery (001) according to claim 4, **characterized in that** an end of the first adapter section (521) facing away from the electrode assembly (100), is flush with an end of the first welding region (710) facing away from the electrode assembly (100).

6. The secondary battery (001) according to claim 4 or 5, **characterized in that**, along the third direction (Z), a projection of the first adapter section (521) lies within a projection of the second adapter section (522).

7. The secondary battery (001) according to any one of claims 4 to 6, **characterized in that**, along the first direction (X), a total length of the second adapter section (522) is S; a length of the first welding region (710) is S1; a length between an end of the first welding region (710) facing towards the electrode assembly (100) and an end of the first adapter section (521) facing towards the electrode assembly (100), is S2; a length between an end of the first welding region (710) facing away from the electrode assembly (100) and an end of the first edge sealing region (730) facing towards the electrode assembly (100), is S3; and a total length of the first edge sealing region (730) is S4, satisfying: S = S1 + S2 + S3 + S4;wherein a length relationship satisfies at least one of the following conditions a2 to d2:
a2. 0.2 mm ≤ S1 ≤ 3 mm;
b2. 0.01 mm ≤ S2 ≤ 1.0 mm;
c2. 0.01 mm ≤ S3 ≤ 1.0 mm; or
d2. 3.5 mm ≤ S4 ≤ 5.5 mm.

8. The secondary battery (001) according to any one of claims 2 to 7, **characterized in that** the secondary battery (001) further comprises a reinforcing sheet (250), and the reinforcing sheet (250) is connected to a surface of the first outer-layer tab (210) facing away from the inner-layer tab (220), and is welded to the first stacked portion (240) to form a second welding region (720).

9. The secondary battery (001) according to claim 8, **characterized in that** a thickness of the reinforcing sheet (250) is 10 µm to 40 µm.

10. The secondary battery (001) according to claim 8 or 9, **characterized in that** a length of the second welding region (720) is P1, and P1 = L1.

11. The secondary battery (001) according to any one of claims 8 to 10, **characterized in that**, along the first direction (X), a length between an end of the second welding region (720) facing away from the electrode assembly (100) and an end of the first stacked portion (240) facing away from the electrode assembly (100), is P2, satisfying: 0.01 mm ≤ P2 ≤ 1 mm; and/or
along the first direction (X), a distance between an end of the second welding region (720) facing towards the electrode assembly (100) and an end of the reinforcing sheet (250) facing towards the electrode assembly (100), is P3, satisfying: 0.01 mm ≤ P3 ≤ 3 mm.

12. The secondary battery (001) according to any one of claims 8 to 11, **characterized in that**, along a second direction (Y), a width of the reinforcing sheet (250) is Y5, and a width of the second welding region (720) is Y1, satisfying: 0.1 mm ≤ Y5 - Y1 ≤ 5 mm; and the first direction (X), the second direction (Y), and the third direction (Z) are perpendicular to each other.

13. The secondary battery (001) according to any one of claims 1 to 7, **characterized in that** the first outer-layer tab (210) is partially folded back to form a first tab section (211) and a second tab section (212), the second tab section (212) is connected to the electrode assembly (100), and the first tab section (211) and the second tab section (212) are overlapped along the third direction (Z); and the first tab section (211) is disposed on one side of the second tab section (212) facing away from the second outer-layer tab (230), and is welded to the first adapter portion (520) to jointly form a first welding region (710).

14. An electrical device (002), **characterized in that** the electrical device (002) comprises the secondary battery (001) according to any one of claims 1 to 13.
